# EUROPÄISCHE PATENTANMELDUNG

(11) **EP 3 372 308 A1**
(43) Veröffentlichungstag der Anmeldung: **12.09.2018**
(21) Anmeldenummer: 18161140.1
(22) Anmeldetag: 12.03.2018
(51) Int. Cl.: B01J 19/00, B01F 3/08, B01F 13/00, B01J 2/06

(54) **FOKUSSIEREINRICHTUNG, TROPFENGENERATOR UND VERFAHREN ZUM ERZEUGEN EINER VIELZAHL VON TRÖPFCHEN**

(30) Priorität: 10.03.2017 DE 102017105194
(71) Anmelder: Little Things Factory GmbH, 56479 Elsoff (DE)
(72) Erfinder: Schilling, Alexander, 56479 Elsoff (DE)
(74) Vertreter: Harrison, Robert John

(57) **Zusammenfassung**

Eine Fokussiereinrichtung (20) wird bereitgestellt, wobei die Fokussiereinrichtung (20) einen Behälter (21), einen Einlasskanal (24), einen Auslasskanal (25) und einen Fokussierabschnitt (26) umfasst. Der Behälter (21) weist eine erste Kammer (21a) mit zumindest einer ersten Einlassöffnung (22) und eine zweite Kammer (21b) mit zumindest einer zweiten Einlassöffnung (23) auf. Der Auslasskanal (25) steht dem Einlasskanal (24) koaxial beabstandet gegenüber. Der Fokussierabschnitt (26), der zwischen dem Einlasskanal (24) und dem Auslasskanal (25) ausgebildet ist, verbindet die erste Kammer (21a) mit der zweiten Kammer (21b).

## Beschreibung

Die vorliegende Erfindung betrifft eine Fokussiereinrichtung, einen Tropfengenerator mit einer Fokussiereinrichtung sowie ein Verfahren zum Erzeugen einer Vielzahl von Tröpfchen.

Aus dem Stand der Technik ist eine Vielzahl von Tropfengeneratoren bekannt. Zum Beispiel offenbart die amerikanische Patentanmeldung Nr. US 2014/017150 einen Tropfengenerator mit einem Vibrator zur Herstellung des Tropfens.

Des Weiteren ist eine Fokussiereinrichtung mit einem Kreuzstück beispielweise aus der US Patentanmeldung Nr. US 2011/075389 bekannt.

Die aus dem Stand der Technik bekannten Tropfengeneratoren können meist jedoch nur geringe Durchsätze generieren, insbesondere nur einzelne Tröpfchen erzeugen. Des Weiteren können die aus dem Stand der Technik bekannten Tropfengeneratoren nur eine bestimmte minimale Tröpfchengröße erzielen.

Aus den vorstehenden Nachteilen der bekannten Technologie, ergibt sich ein vielseitiges Verbesserungspotential.

Es ist daher Aufgabe der vorliegenden Erfindung ein Tropfengenerator mit einer Fokussiereinrichtung bereitzustellen, der höhere Durchsätze erlaubt und mehrere, kleinere Tröpfchen, insbesondere Tropfenschwärme, erzeugen kann.

Erfindungsgemäß wird dies durch eine Fokussiereinrichtung gemäß den Merkmalen des Hauptanspruchs 1 und durch einen Tropfengenerator gemäß den Merkmalen des Nebenanspruchs 13 sowie durch ein Verfahren zum Erzeugen einer Vielzahl von Tröpfchen gemäß den Merkmalen des Nebenanspruchs 17 gelöst. Bevorzugte Ausgestaltungen sind in den abhängigen Ansprüchen aufgeführt.

In Anbetracht der bekannten Technologie und nach einem ersten Aspekt der vorliegenden Erfindung ist eine Fokussiereinrichtung bereitgestellt, die einen Behälter, einen Einlasskanal, einen Auslasskanal und einen Fokussierabschnitt umfasst. Der Behälter weist eine erste Kammer mit zumindest einer ersten Einlassöffnung und eine zweite Kammer mit zumindest einer zweiten Einlassöffnung auf. Der Auslasskanal steht dem Einlasskanal koaxial beabstandet gegenüber. Der Fokussierabschnitt, der zwischen dem Einlasskanal und dem Auslasskanal ausgebildet ist, verbindet die erste Kammer mit der zweiten Kammer.

Nach einem weiteren Aspekt ist der Einlasskanal ausgestaltet, derart, dass dieser einen Einlassabschnitt umfasst und der Auslasskanal einen Auslassabschnitt umfasst, wobei der minimale Durchmesser des Einlassabschnitts kleiner ist als der minimale Durchmesser des Auslassabschnitts. Insbesondere weist zumindest einer von dem Einlasskanal (24) und dem Auslasskanal (25) einen Durchmesser von ca. 1000 µm auf. Durch diese Dimensionierung und Anordnung der Fokussiereinrichtung kann eine kleine Tröpfchengröße ermöglicht werden.

Nach einem weiteren Aspekt umfasst der minimale Durchmesser des Einlassabschnitts ca. 50 µm und der minimale Durchmesser des Auslassabschnitts ca. 60 µm. Durch diese Dimensionierung und Anordnung der Fokussiereinrichtung kann eine kleine Tröpfchengröße ermöglicht werden.

Nach einem weiteren Aspekt weist der Einlassabschnitt des Einlasskanals stromabwärts eine Verengung über einer Länge von größer als oder gleich zu 5 mm auf. Insbesondere weist der Einlassabschnitt eine dreidimensionale Einlassspitze auf. Durch diese Ausgestaltung der Einlassspitze kann eine kleine Tröpfchengröße ermöglicht werden.

Nach einem weiteren Aspekt weist der Auslassabschnitt des Auslasskanals stromaufwärts eine Verengung über einer Länge von größer als oder gleich zu 5 mm auf. Insbesondere weist der Auslassabschnitt eine dreidimensionale Auslassspitze auf. Durch diese Ausgestaltung der Auslassspitze kann eine kleine Tröpfchengröße ermöglicht werden und verbessert die Monodispersität.

Nach einem weiteren Aspekt steht der Auslasskanal zu dem Einlasskanal mit einem Abstand von ca. 100 µm koaxial beabstandet gegenüber. Durch diese Dimensionierung und Anordnung der Fokussiereinrichtung kann eine kleine Tröpfchengröße ermöglicht werden.

Nach einem weiteren Aspekt, weist der Behälter eine zylindrische Gestalt auf, insbesondere weist der Behälter eine Länge von ca. 25 mm und eine Breite von ca. 15 mm auf. Jedoch ist die Erfindung darauf nicht beschränkt, der Behälter kann auch eine sphärische Gestalt aufweisen und oder ein kleineres Volumen umfassen.

In Anbetracht der bekannten Technologie und nach einem zweiten Aspekt der vorliegenden Erfindung ist ein Tropfengenerator zum Erzeugen einer Vielzahl von Tröpfchen bereitgestellt. Der Tropfengenerator umfasst ein Gehäuse, einen Verteilerabschnitt, eine Fokussiereinrichtung und spiralförmiges Verweilelement. Der Verteilerabschnitt weist eine Vielzahl von Einlässen zum Aufnehmen mindestens eines Fluids und mindestens einen Auslass zur Ausgabe der Vielzahl von Tröpfchen auf. Die Vielzahl von Einlässen ist mit dem Behälter der Fokussiereinrichtung in dem Gehäuse wirkverbunden. Das spiralförmige Verweilelement wirkverbindet den Auslasskanal der Fokussiereinrichtung mit dem mindestens einen Auslass des Verteilerabschnitts in dem Gehäuse. Durch eine derartige Anordnung des Verweilelements können die Tröpfchen beispielsweise eine Hülle ausbilden (Verkapselungsreaktion). Ferner können durch eine derartige Anordnung des Verweilelements die Tröpfchen, wenn die Tröpfchen über die Fokussiereinrichtung in das Verweilelement laufen, kumulieren.

Nach einem weiteren Aspekt ist das Gehäuse mindestens teilweise aus einem glasartigen Material, insbesondere aus Borosilikatglas oder Silikatglas und/oder Quarzglas, hergestellt. Durch diese Ausbildung des Gehäuses wird sichergestellt, dass die Photodioden delektieren können. Insbesondere eignet sich für die optimale Transmission Borosilikatglas oder Quarzglas. Jedoch ist die vorliegende Erfindung darauf nicht beschränkt, das Gehäuse könnte auch aus einem Polymer bestehen.

Nach einem weiteren Aspekt weist das spiralförmige Verweilelement große Kurvenradien auf. Durch eine derartiges Verweilelement können die Tröpfchen, wenn die Tröpfchen über die Fokussiereinrichtung in das Verweilelement laufen, kumulieren.

Nach einem weiteren Aspekt ist das spiralförmige Verweilelement als eine Reaktionskammer ausgebildet. Durch eine derartiges Verweilelements können die Tröpfchen beispielsweise eine Hülle ausbilden (Verkapselungsreaktion).

In Anbetracht der bekannten Technologie und nach einem dritten Aspekt der vorliegenden Erfindung ist ein Verfahren zum Erzeugen einer Vielzahl von Tröpfchen bereitgestellt. Das Verfahren umfasst die Schritte: Bereitstellen mindestens eines Fluids; Zuführen des mindestens eines Fluids in einen Tropfengenerator; Fokussieren des mindestens eines Fluids in einer Fokussiereinrichtung; Ausbilden einer Vielzahl von Tröpfchen an einem Fokussierabschnitt der Fokussiereinrichtung; und Weiterleiten der Vielzahl von gebildeten Tröpfchens in ein spiralförmiges Verweilelement.

Nach einem weiteren Aspekt umfasst das Verfahren ein Kumulieren der Vielzahl von gebildeten Tröpfchen beim Einlaufen in das spiralförmige Verweilelement. Dadurch kann die Reaktionsbedingung bzw. damit verbunden die Ausbeute / Beschaffenheit der Tröpfchen verbessert werden.

Nach einem weiteren Aspekt der vorliegenden Erfindung ist eine Verwendung des Tropfengenerators zur Erzeugung einer Emulsion aus einer beliebigen Kombination nicht mischbarer Flüssigkeiten eines anorganischen, organischen oder fluorierten Fluids bereitgestellt.

Nach einem weiteren Aspekt ist eine Verwendung des Tropfengenerators zur Erzeugung eines Tropfens aus mindestens zwei unterschiedlichen Fluiden bereitgestellt.

Nach einem weiteren Aspekt ist eine Verwendung des Tropfengenerators zur Erzeugung eines Tropfenschwarms bereitgestellt.

Nach einem weiteren Aspekt ist eine Verwendung des Tropfengenerators zur Erzeugung einer Vielzahl von eingekapselten Tröpfchen, insbesondere durch eine Polymerschicht eingekapselten Tröpfchen, bereitgestellt.

Weitere Eigenschaften und Vorteile der Erfindung ergeben sich aus der folgenden, rein beispielhaften und in keiner Weise beschränkenden Beschreibung bevorzugter Ausführungsformen der Erfindung unter Bezugnahme auf die beugefügten Zeichnungen, darin zeigt:
FIG. 1A schematisch eine vertikale Querschnittsansicht einer Fokussiereinrichtung nach einer Ausführungsform der vorliegenden Erfindung;
FIG. 1B schematisch eine vertikale Querschnittsansicht eines Einlasskanals der Fokussiereinrichtung aus FIG. 1A;
FIG. 1C schematisch eine vertikale Querschnittsansicht eines Auslasskanals der Fokussiereinrichtung aus FIG. 1A;
FIG. 1D schematisch eine horizontale Querschnittsansicht entlang der Schnittlinien DA-DA und DB-DB der Fokussiereinrichtung aus FIG. 1A;
FIG. 2 schematisch eine vertikale Querschnittsansicht eines Tropfengenerators nach einer Ausführungsform der vorliegenden Erfindung; und
FIG. 3 zeigt ein Flussdiagramm eines Verfahrens zum Erzeugen einer Vielzahl von Tropfen mit dem Tropfengenerator nach einer Ausführungsform der vorliegenden Erfindung.

Ausgewählte Ausführungsformen werden nun mit Bezugnahme zu den Zeichnungen beschrieben. Es wird für einen Fachmann auf dem Gebiet von Tropfengeneratoren aus dieser Offenbarung ersichtlich, dass die folgende Beschreibung der Ausführungsformen lediglich zur Illustration bereitgestellt ist, und nicht für den Zweck die Erfindung, welche durch die beigefügten Ansprüche und ihre Äquivalente definiert wird, einzuschränken.

Da die genaue Funktionsweisen von Tropfengeneratoren zum Erzeugen von Tröpfchen für einen Fachmann auf diesem Gebiet wohlbekannt sind, wird im Folgenden der Kürze halber auf die spezifische Funktionsweisen verzichtet und diese nicht hierin beschrieben und/oder veranschaulicht, sondern lediglich deren einzelnen Komponenten, geometrische Ausgestaltungen und deren Anordnung zueinander beschrieben und/oder veranschaulicht.

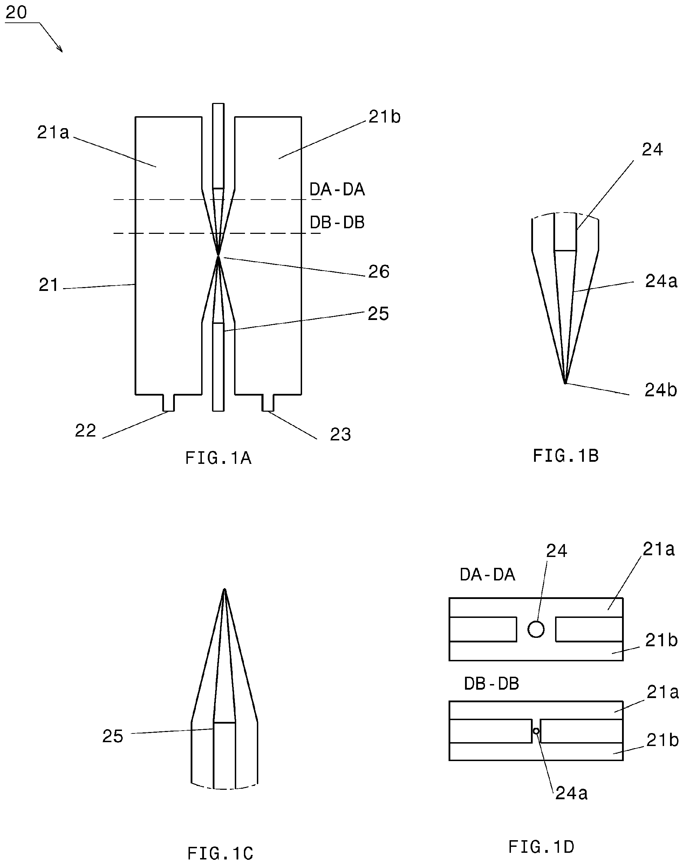

Zunächst bezugnehmend auf FIG. 1A, die schematisch eine vertikale Querschnittsansicht einer Fokussiereinrichtung 20 nach einer Ausführungsform der vorliegenden Erfindung zeigt. Die Fokussiereinrichtung 20 umfasst einen Behälter 21 der vorliegend zylindrisch ausgebildet ist und im Wesentlichen als ein H-Profil ausgebildet ist. Der Behälter 21 weist eine Länge von ca. 25mm und eine Breite von ca. 15mm auf. Jedoch ist die vorliegende Erfindung darauf nicht beschränkt, der Behälter 21 kann eine unterschiedliche Form, beispielsweise eine sphärische Form mit Einschnitten aufweisen und/oder unterschiedliche dimensioniert sein. Wie in Fig. 1A gezeigt, weist der Behälter 21 eine erste Kammer 21a (linke Kammer in Fig. 1A) und eine zweite Kammer 21b (rechte Kammer in Fig. 1A) auf. Wie in Fig. 1A gezeigt, umfasst die erste Kammer 21a eine erste Einlassöffnung 22, die an dem unteren Ende der ersten Kammer 21a ausgebildet ist. Die zweite Kammer 21b umfasst eine zweite Einlassöffnung 23, die an dem unteren Ende der zweiten Kammer 21b ausgebildet ist. Jedoch ist die vorliegende Erfindung darauf nicht beschränkt, zumindest eine von der ersten Kammer 21a und zweiten Kammer 21b kann eine zusätzliche Einlassöffnung (nicht dargestellt) aufweisen, die beispielsweise am oberen Ende der jeweiligen Kammer oder in einem mittleren Abschnitt der jeweiligen Kammer ausgebildet ist. Über die ersten und zweiten Einlassöffnungen 22 und 23 wird mindestens ein Fluid in den Behälter 21 der Fokussiereinrichtung 20 eingeströmt. Das mindestens eine Fluid kann beispielsweise eine ölige oder wässrige Lösung sein, insbesondere eine organische, anorganische oder fluorierte Lösung sein.

Wie weiter in FIG. 1A gezeigt, umfasst die Fokussiereinrichtung 20 einen Fokussierabschnitt 26, der die ersten und zweiten Kammern 21a und 21b des Behälters 21 miteinander verbindet. Des Weiteren umfasst die Fokussiereinrichtung 20 im Bereich des Fokussierabschnitts 26 einen Einlasskanal 24 und einen Auslasskanal 25. Insbesondere ist der Fokussierabschnitt 26 zwischen dem Einlasskanal 24 und dem Auslasskanal 25 ausgebildet. Dabei ist der Einlasskanal 24 am oberen Ende des Fokussierbereichs 26 und der Auslasskanal 25 am unteren Ende des Fokussierbereichs 26 ausgebildet. Der Auslasskanal 25 steht dem Einlasskanal 24 koaxial beabstandet gegenüber, wie in FIG. 1A gezeigt ist. Der Auslasskanal 25 steht dem Einlasskanal 24 koaxial beabstandet mit einem Abstand von ca. 100 µm gegenüber. Der Einlasskanal 24 umfasst weiter einen Einlassabschnitt 24a und der Auslasskanal 25 umfasst einen Auslassabschnitt 25a, wie genauer in den FIGS. 1B und 1C gezeigt ist. Wie in FIG. 1A gezeigt ist der Einlasskanal 24 und der Auslasskanal 25 jeweils ein röhrenförmiger Kanal mit einem Durchmesser von ca. 1000 µm.

FIG. 1B zeigt schematisch eine vergrößerte vertikale Querschnittsansicht des Einlasskanals 24 der Fokussiereinrichtung 20 aus FIG. 1A. Wie am besten in den FIG. 1B zu sehen ist, weist der Einlassabschnitt 24a einen unterschiedlichen Durchmesser von dem Einlasskanal 24 auf. Insbesondere verjüngt bzw. verengt sich der Einlassabschnitt 24a des Einlasskanals 24 stromabwärts zunehmend. An dem äußersten Ende des Einlassabschnitts 24a weist eine sog. Einlassspitze 24b des Einlassabschnitts 24a des Einlasskanals 24 einen minimalen Durchmesser von ca. 50 µm auf, wie in FIG. 1B gezeigt ist. Wie weiter in FIG. 1B zu sehen ist, erstreckt sich die Verjüngung bzw. Verengung des Einlassabschnittes 24a stromabwärts über eine Länge von ca. 5mm. Jedoch ist die vorliegende Erfindung darauf nicht beschränkt, die Verjüngung bzw. Verengung des Einlassabschnittes 24a stromabwärts kann sich über eine Länge von größer als ca. 5mm erstrecken. Des Weiteren kann die Einlassspitze 24b des Einlassabschnitts 24a als eine dreidimensionale Spitze ausgebildet sein, falls benötigt und/oder gewünscht.

FIG. 1C zeigt schematisch eine vergrößerte vertikale Querschnittsansicht des Auslasskanals 25 der Fokussiereinrichtung 20 aus FIG. 1A. Wie am besten in den FIG. 1C zu sehen ist, weist der Auslassabschnitt 25a einen unterschiedlichen Durchmesser von dem Auslasskanal 25 auf. Insbesondere verjüngt bzw. verengt sich der Auslassabschnitt 25a des Auslasskanals 25 stromaufwärts zunehmend. An dem äußersten Ende des Auslassabschnitts 25a weist eine sog. Auslassspitze 25b des Auslassabschnitts 25a des Auslasskanals 25 einen minimalen Durchmesser von ca. 60 µm auf, wie in FIG. 1C gezeigt ist. Demnach ist der minimalste Durchmesser des Einlassabschnitts 24a kleiner als der minimalste Durchmesser des Auslassabschnitts 25a. Wie weiter in FIG. 1C zu sehen ist, erstreckt sich die Verjüngung bzw. Verengung des Auslassabschnittes 25a stromaufwärts über eine Länge von ca. 5mm. Jedoch ist die vorliegende Erfindung darauf nicht beschränkt, die Verjüngung bzw. Verengung des Auslassabschnittes 25a stromaufwärts kann sich über eine Länge von größer als ca. 5mm erstrecken. Des Weiteren kann die Auslassspitze 25b des Auslassabschnitts 25a als eine dreidimensionale Spitze ausgebildet sein, falls benötigt und/oder gewünscht.

FIG. 1D zeigt schematisch eine horizontale Querschnittsansicht entlang der Schnittlinien DA-DA und DB-DB der Fokussiereinrichtung 20 aus FIG. 1A. FIG. 1D zeigt somit explizit die unterschiedlichen Durchmesser des Einlasskanals 24 und des Einlassabschnitts 24a.

Bezugnehmend auf FIG. 1A, über den Einlasskanal 24, insbesondere den Einlassabschnitt 24a, strömt zusätzlich zu den ersten und zweiten Einlassöffnungen 22 und 23 über die Einlassspitze 24b mit einem Durchmesser von ca. 50 µm in die Fokussiereinrichtung 20 das mindestens eine Fluid ein. Durch die bestimmte Anordnung und Ausgestaltung der ersten und zweiten Kammern 21a und 21b sowie die Anordnung und Ausgestaltung des Fokussierabschnitts 26, insbesondere da die Einlassspitze 24b mit einem Durchmesser von ca. 50 µm zu der Auslassspitze 25b mit einem Durchmesser von ca. 60 µm koaxial mit einem Abstand von ca. 1000 µm gegenübersteht, bildet sich im Fokussierabschnitt, insbesondere an der Auslassspitze 25b ein Abriss einer Vielzahl von Tropfen bzw. Tröpfchen bestehend aus dem über die ersten und zweiten Einlassöffnungen 22 und 23 und über die Einlassspitze 24b eingeströmten mindestens einem Fluid. Spezifischer kann sich dabei eine Vielzahl von Tropfen mit einer Größe von bis ca. 2-3 µm bilden.

Wie bereits erläutert kann an dem Fokussierabschnitt 26, insbesondere der Auslassspitze 25b, eine Vielzahl von Tropfen aus mindestens zwei unterschiedlichen Fluiden gebildet werden. Ferner kann an dem Fokussierabschnitt 26, insbesondere der Auslassspitze 25b, eine Vielzahl von Tropfen aus einer Emulsion aus mindestens einem organischen und mindestens einem anorganischen Fluid gebildet werden, falls benötigt und/oder gewünscht. Ferner kann an dem Fokussierabschnitt 26, insbesondere der Auslassspitze 25b, eine Vielzahl von Tropfen aus einer Emulsion aus einer beliebigen Kombination nicht mischbarer Flüssigkeiten eines anorganischen, organischen oder fluorierten Fluids gebildet werden, falls benötigt und/oder gewünscht. Beispielsweise kann ferner an dem Fokussierabschnitt 26, insbesondere der Auslassspitze 25b, eine Vielzahl von eingekapselten Tröpfchen gebildet werden, insbesondere eine Vielzahl von durch eine Polymerschicht eingekapselten Tröpfchen gebildet werden. Nach dem Abriss der Vielzahl von Tropfen gelangen diese weiter zum stromabwärtigen Auslasskanal 25. Anwendung findet die erfindungsgemäße Fokussiereinrichtung bei der Verkapselung von Substanzen, beispielsweise bei der Herstellung kleiner mit einer Substanz gefüllten Perlen bzw. Säulenmaterialien, die eine bestimmte Korngröße haben müssen.

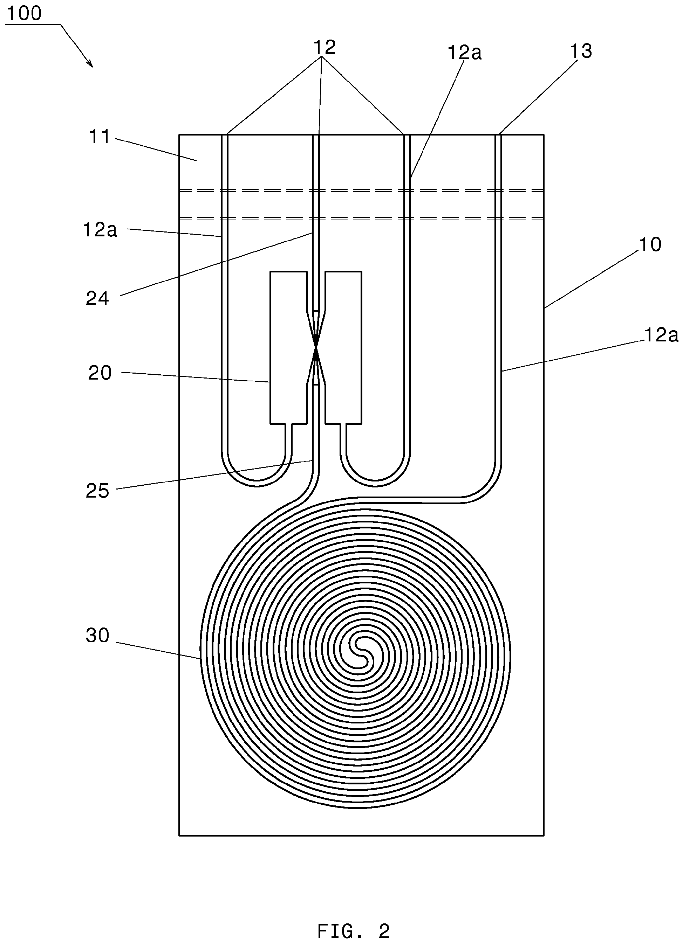

FIG. 2 zeigt schematisch eine vertikale Querschnittsansicht eines Tropfengenerators 100 zum Erzeugen einer Vielzahl von Tropfen bzw. Tröpfchen nach einer Ausführungsform der vorliegenden Erfindung mit der wie vorstehend beschriebenen Fokussiereinrichtung 20. Wie in FIG. 2 zu sehen ist, umfasst der Tropfengenerator 100 ein Gehäuse 10 bzw. einen mikrostrukturierten Chip, das/der beispielsweise aus einem glasartigen Material, insbesondere aus Silikatglas und/oder Quarzglas oder Silizium/Glas oder Borosilikatglas, hergestellt sein kann. Jedoch ist die vorliegende Erfindung darauf nicht beschränkt, das Gehäuse bzw. der mikrostrukturierte Chip kann ferner auch mindestens einseitig transparent ausgebildet sein. Ferner kann das Gehäuse bzw. der mikrostrukturierte Chip eine quaderförmige Gestalt aufweisen, beispielweise mit der Bemaßung 60x115x6mm (BreitexLängexDicke). Das Gehäuse 10 des Tropfengenerators 100 kann einem Druck von ca. 30-40 bar standhalten.

Des Weiteren umfasst der Tropfengenerator 100 einen Verteilerabschnitt bzw. Verteiler 11 die Fokussiereinrichtung 20 und ein spiralförmiges Verweilelement 30. Der Verteilerabschnitt bzw. Verteiler 11 weist eine Vielzahl von Einlässen 12 und mindesten einen Auslass 13 auf. Über die Vielzahl von Einlässen 12 wird das mindestens eine Fluid aufgenommen und über Kanäle 12a an die erste und zweite Einlassöffnungen 22 und 23 der ersten und zweiten Behälter 21a und 21b der Fokussiereinrichtung 20 weitergeführt. Mindestens ein Einlass 12 ist mit dem Einlasskanal 24 der Fokussiereinrichtung 20 verbunden und gibt das mindestens eine aufgenommene Fluid an den Einlasskanal 24 weiter. Der Auslasskanal 25 der Fokussiereinrichtung 20 ist an das spiralförmige Verweilelement 30 verbunden.

Die in der Fokussiereinrichtung 20 gebildete Vielzahl von Tropfen bzw. Tröpfchen gelangt somit über den Auslasskanal 25 in das spiralförmige Verweilelement 30. Vorliegend ist das spiralförmige Verweilelement 30 als Reaktionskammer ausgebildet und erlaubt eine Reaktion der Vielzahl von Tropfen. Dabei ist vorliegend eine Grenzflächenreaktion möglich (beispielsweise Nylonverfahren) oder eine Phasentransfer-Reaktion bzw. Phasentransfer-Katalyse. Jedoch ist die vorliegende Erfindung darauf nicht beschränkt, alternativ wäre auch eine einfache Reaktion innerhalb des Tropfens mit definiertem Volumen unter Verwendung einer inerten kontinuierlichen Phase möglich. Zu Beispiel können die zwei unterschiedlichen Fluiden miteinander reagieren. Die Verweilzeit in dem Verweilelement 30 kann an der Reaktionszeit angepasst werden. Beispiele von solchen Reaktionen sind z.B. In einem anderen Aspekt kann einen Mantel um einen Tropfen zur Einkapselung eines Partikels in dem Verweilelement 30 aushärten. Mit dem erfindungsgemäßen Tropfengenerator 100 ist beispielsweise eine biologische Verkapselung mittels Alginaten, zum Beispiel für Pharmaka, möglich.

Das spiralförmige Verweilelement (30) weist große Kurvenradien auf, wie in FIG. 2 zu sehen ist, um die Vielzahl von Tropfen aufrechtzuerhalten und um eine Reaktion an der Vielzahl von Tropfen entstehen lassen zu können. Über das spiralförmige Verweilelement 30 gelangt die Vielzahl von Tropfen über mindestens einen Kanal 12a an mindestens einen Auslass 13 des Verteilerabschnitts bzw. Verteilers 11, um als Tropfenschwarm an dem Auslass 13 aus dem Tropfengenerator 100 auszuströmen. Vorliegend haben die Kanäle 12a einen Durchmesser von ca. 1000 µm. Jedoch ist die vorliegende Erfindung darauf nicht beschränkt, die Kanäle 12a sowie der Einlasskanal 24 und der Auslasskanal 25 können Kanaldurchmesser mit einem unterschiedlichen Durchmesser von ca. 1000 µm aufweisen, falls benötigt und/oder gewünscht.

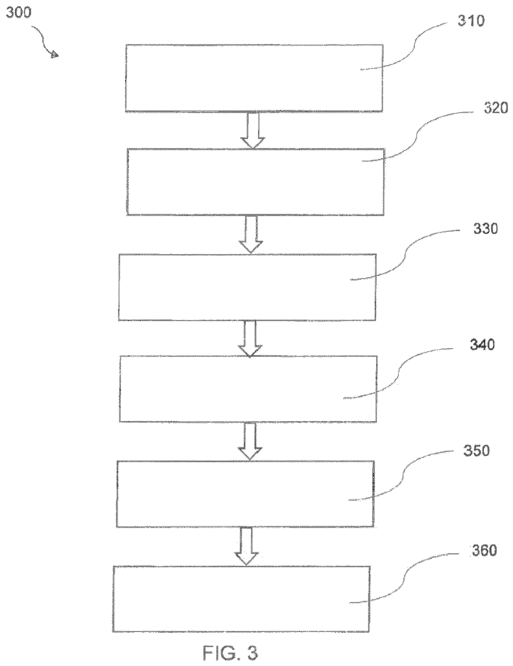

FIG. 3 zeigt ein Flussdiagramm eines Verfahrens (300) zum Erzeugen einer Vielzahl von Tropfen mit dem Tropfengenerator 100 nach einer Ausführungsform der vorliegenden Erfindung. Das Verfahrens zum Erzeugen einer Vielzahl von Tropfen umfasst die Schritte: (310) Bereitstellen mindestens eines Fluids; (320) Zuführen des mindestens eines Fluids in den Tropfengenerator 100 über die Einlasskanäle; (330) Fokussieren des mindestens eines Fluids in der Fokussiereinrichtung 20; (340) Ausbilden einer Vielzahl von Tröpfchen an dem Fokussierabschnitt 26 der Fokussiereinrichtung 20; und (350) Weiterleiten der Vielzahl von gebildeten Tröpfchen in das spiralförmiges Verweilelement 30. Ferner umfasst das Verfahren den Schritt: (360) Kumulieren der Vielzahl von gebildeten Tropfen beim Einlaufen in das spiralförmige Verweilelement 30.

Während lediglich ausgewählte Ausführungsformen ausgewählt worden sind, um die vorliegende Erfindung zu beschreiben, wird es Fachleuten anhand dieser Offenbarung ersichtlich, dass verschiedene Änderungen und Modifikationen hierin gemacht werden können, ohne vom Umfang der Erfindung, wie dieser in den beigefügten Ansprüchen definiert ist, abzuweichen.

### Bezuqszeichenliste

- 10: Gehäuse
- 11: Verteilabschnitt
- 12: Einlass
- 12a: Kanal
- 13: Auslass
- 20: Fokussiereinrichtung
- 21: Behälter
- 21a: erste Kammer
- 21b: zweite Kammer
- 22: erste Einlassöffnung
- 23: zweite Einlassöffnung
- 24: Einlasskanal
- 24a: Einlassabschnitt
- 24b: Einlassspitze
- 25: Auslasskanal
- 25a: Auslassabschnitt
- 25b: Auslassspitze
- 26: Fokussierabschnitt
- 30: Verweilelement
- 100: Tropfengenerator

## Patentansprüche

1. Fokussiereinrichtung (20), umfassend:
einen Behälter (21) aufweisend eine erste Kammer (21a) mit zumindest einer ersten Einlassöffnung (22) und eine zweite Kammer (21b) mit zumindest einer zweiten Einlassöffnung (23);
einen Einlasskanal (24);
einen Auslasskanal (25), welcher dem Einlasskanal (24) koaxial beabstandet gegenübersteht; und
einen Fokussierabschnitt (26), der zwischen dem Einlasskanal (24) und dem Auslasskanal (25) ausgebildet ist und die erste Kammer (21a) mit der zweiten Kammer (21b) verbindet.

2. Fokussiereinrichtung (20) nach Anspruch 1, bei welcher der Einlasskanal (24) einen Einlassabschnitt (24a) umfasst und der Auslasskanal (25) einen Auslassabschnitt (25a) umfasst, wobei der minimale Durchmesser des Einlassabschnitts (24a) kleiner ist als der minimale Durchmesser des Auslassabschnitts (25a).

3. Fokussiereinrichtung (20) nach Anspruch 1 oder 2, bei welcher zumindest einer von dem Einlasskanal (24) und dem Auslasskanal (25) einen Durchmesser von ca. 1000 µm aufweist, wobei der minimale Durchmesser des Einlassabschnitts (24a) ca. 50 µm und/oder der minimale Durchmesser des Auslassabschnitts (25a) ca. 60 µm umfasst.

4. Fokussiereinrichtung (20) nach einem der Ansprüche 2 oder 3, bei welcher der Einlassabschnitt (24a) stromabwärts eine Verengung über einer Länge von größer als oder gleich zu 5 mm aufweist.

5. Fokussiereinrichtung (20) nach einem der Ansprüche 2 bis 4, bei welcher der Auslassabschnitt (25a) des Auslasskanals (25) stromaufwärts eine Verengung über einer Länge von größer als oder gleich zu 5 mm aufweist.

6. Fokussiereinrichtung (20) nach einem der Ansprüche 1 bis 6, bei welcher der Auslasskanal (25) zu dem Einlasskanal (24) mit einem Abstand von ca. 100 µm koaxial beabstandet gegenübersteht.

7. Fokussiereinrichtung (20) nach einem der Ansprüche 1 bis 6, bei welcher der Behälter (21) eine Länge von ca. 25 mm und eine Breite von ca. 15 mm und/oder eine zylindrische Gestalt aufweist, insbesondere ein H-Profil aufweist.

8. Tropfengenerator (100) zum Erzeugen einer Vielzahl von Tröpfchen, umfassend:
ein Gehäuse (10);
einen Verteilerabschnitt (11) mit einer Vielzahl von Einlässen (12) zum Aufnehmen mindestens eines Fluids und mindestens einem Auslass (13) zur Ausgabe der Vielzahl von Tröpfchen;
eine Fokussiereinrichtung (20) nach einem der Ansprüche 1 bis 7, wobei die Vielzahl von Einlässen (12) mit dem Behälter (21) der Fokussiereinrichtung (20) in dem Gehäuse (10) wirkverbunden ist; und
ein spiralförmiges Verweilelement (30), welches den Auslasskanal (25) der Fokussiereinrichtung (20) mit dem mindestens einen Auslass (13) des Verteilerabschnitts (11) in dem Gehäuse (10) wirkverbindet.

9. Tropfengenerator (100) nach Anspruch 8, bei welchem das Gehäuse (10) mindestens teilweise aus einem glasartigen Material, insbesondere aus Borosilikatglas oder Silikatglas und/oder Quarzglas, hergestellt ist.

10. Tropfengenerator (100) nach Anspruch 8 oder 9, bei welchem das spiralförmiges Verweilelement (30) große Kurvenradien aufweist.

11. Tropfengenerator (100) nach einem der Ansprüche 8 bis 10, bei welchem das spiralförmige Verweilelement (30) als eine Reaktionskammer ausgebildet ist.

12. Verfahren (300) zum Erzeugen eine Vielzahl von Tröpfchen, umfassend die Schritte:
- Bereitstellen (310) mindestens eines Fluids;
- Zuführen (320) des mindestens eines Fluids in einen Tropfengenerator (100) nach einem der Ansprüche 8 bis 11;
- Fokussieren (330) des mindestens eines Fluids in einer Fokussiereinrichtung (20) nach einem der Ansprüche 1 bis 7;
- Ausbilden (340) einer Vielzahl von Tröpfchen an einem Fokussierabschnitt (26) der Fokussiereinrichtung (20); und
- Weiterleiten (350) der Vielzahl von gebildeten Tröpfchens in ein spiralförmiges Verweilelement (30).

13. Verfahren nach Anspruch 12, weiter umfassend
Kumulieren (360) der Vielzahl von gebildeten Tröpfchen beim Einlaufen in das spiralförmige Verweilelement (30).

14. Verwendung des Tropfengenerators (100) nach einem der Ansprüche 8 bis 11 zur Erzeugung einer Emulsion aus einer beliebigen Kombination nicht mischbarer Flüssigkeiten eines anorganischen, organischen oder fluorierten Fluids, und/oder aus mindestens zwei unterschiedlichen Fluiden, und/oder zur Erzeugung eines Tropfenschwarms, und/oderzur Erzeugung einer Vielzahl von eingekapselten Tröpfchen, insbesondere durch eine Polymerschicht eingekapselten Tröpfchen.
